# EUROPEAN PATENT SPECIFICATION

(11) **EP 2 664 857 B1**
(45) Date of publication and mention of the grant of the patent: **07.10.2015**
(21) Application number: 13167802.1
(22) Date of filing: 15.05.2013
(51) Int. Cl.: F24F 7/00, F24F 3/16, F24C 15/20

(54) **Hood filter**
Filter für eine Abzugshaube
Filtre de hotte

(30) Priority: 16.05.2012 IT UD20120090
(43) Date of publication of application: 20.11.2013
(73) Proprietor: FALMEC S.P.A., 31029 Vittorio Veneto (Treviso) (IT)
(72) Inventor: Poser, Danilo, 31029 Vittorio Veneto (TV) (IT)
(74) Representative: Petraz, Gilberto Luigi

(56) References cited:
- EP-A1- 1 514 604
- EP-A1- 2 072 920
- JP-A- 2006 234 236
- US-A- 4 244 710
- US-A- 5 035 728

## Description

### FIELD OF THE INVENTION

The present invention concerns a hood filter, or equivalent filtering apparatus, provided with an air purification device such as for example, but not restrictively, a hood filter typically used in kitchens, generally above the hob, in order to take in air that is impregnated with the steam and odors that are produced during cooking, and to purify said air through suitable filters.

### BACKGROUND OF THE INVENTION

Two different types of hoods for kitchens are known: a first is that of "suction" hoods, which convey the air taken in from the inside toward the outside of the kitchen through an expulsion chimney; the second is that of "filtering" hoods, also called "recirculating" hoods, which filter the air taken in from the kitchen before re-introducing it inside the kitchen again.

The latter typically comprise a support frame with the desired shape and sizes, which is attached to the wall or ceiling, or to a wall unit. It is provided with a suction aperture, facing toward the hob where the food is cooked, through which, by means of ventilation means, the air enters. It is also provided with an expulsion aperture, through which the filtered air is introduced into the surrounding environment.

The suction aperture is typically associated with filters, used especially but not only to process the grease: the filters can be for example metal, acrylic, labyrinth or condensation type.

Before being re-introduced into the environment, the air taken in is further filtered through filters to abate the odors.

In places where the known filtering apparatus can be installed, as well as the pollution due to the cooking of the foods, there may also be present the normal atmospheric pollution formed by particulates of various types, which are breathed in and which are also harmful to the health. The presence of these particulates can promote the propagation and proliferation of microorganisms, harmful for the health and also the source, for example, of unpleasant smells.

A hood filter of a known type is described in the application DE-A-102006030759 and provides, along the air suction path, a first ionizer, a plurality of filters, a suction ventilator, downstream of the first ionizer and of the filters, and finally a second ionizer.

Another hood filter of a known type is described in the application UD2010A000021 in the name of the present Applicant. This known hood comprises, along the air suction path, first filter means, second filter means to further filter the stream of air after it has been filtered by the first filter means, ionization means able to ionize the air taken in in order to abate the pollution caused by particulate and the smells, and ventilator means downstream of the ionization means, able to cause the stream of air to be taken in. This known solution, although satisfactory in terms of abating the smells and purifying the air compared with the state of the art, can in any case be subjected to improvements in terms of increasing the quality of the purified air, which is a requirement that is in increasing demand in the field of hood filters.

Document EP-A-1.514.604 describes a portable air filtration device for a vehicle which comprises an air inlet fan and, downstream of the fan, a mechanism to ionize the air, a filter mean and an electrode to generate an electric field between the ionization mechanism and the filter mean. The stream of air taken in by the fan is directed linearly directly toward the air ionization mechanism and the successive electric field and filter mean. Consequently, the effectiveness of the ionization directly downstream, at exit from the fan, where the stream of air is typically faster, can be limited or in any case not satisfactory. This solution therefore, being intended for a portable use in vehicles, and so with limited volumes of air to process, would not be suitable for use in hood filters, in particular for kitchens, either in terms of volumes of air processed, or in terms of the quality of the air processed.

Document US-A-4,244,710 describes a filter to purify the air which comprises two axial ventilators disposed at the sides of ionization electrodes and a micro-porous filter mean. The stream of air taken in axially by the fan is directed linearly directly toward ionization electrodes and the successive micro-porous filter mean. Consequently, this solution also proposes in-line ionization, directly downstream of the exit of the air taken in by the ventilators and may therefore be unsatisfactory, as discussed above.

Document JP-A-2006234235 describes a ventilation apparatus provided with a liquid abater, or scrubber. This known apparatus comprises a filter for grease, an axial ventilator and a processing chamber provided with a dust collection and deodorization section which comprises an ionization part. In this case too, the processing chamber is in line directly downstream of the axial ventilator. The liquid abatement part is provided at exit: this attracts and separates the particles of oil electrically loaded in the ionization part.

Document EP-A-2.072.920 describes an air purification apparatus that comprises a filter to remove particles and a filter to remove gas, provided with material to adsorb the gas, such as for example zeolite or active carbon.

Document US-A-5,035,728 describes a compact unit for cleaning ambient air in the home or office, also called ambient aspirator, which includes a mechanical pre-filter, an electrostatic precipitator, a main cartridge filter provided with a synthetic mean with integrated electric charges, a sheet of plastic with active carbon powder, a rear ventilation unit and ionization needles near the exit. This known unit comprises a device to detect the quality of the air having an adjustable control to select a level of air quality to be obtained and a safety switch supported by the main cartridge filter. This known unit, being provided for ambient purification, is not suitable for use for kitchen hoods, where the ambient air is much more loaded with odoriferous molecules. For example, if the ambient purification unit were used in a kitchen, its suction function would be completely compromised in a very short time due to the saturation of the main cartridge filter.

One purpose of the present invention is therefore to eliminate the problems found in the state of the art by obtaining a hood filter provided with an air purification device, in particular a hood filter for kitchens, with means to purify/sanitize the air, which allows to further improve the quality of the air in the environment, drastically abating impurities and odors.

Another purpose of the present invention is to obtain a hood filter provided with a purification device, with means to purify/sanitize the air, which is totally safe during normal functioning and also during maintenance operations.

Another purpose of the present invention is to obtain a hood filter provided with a purification device, with means to purify/sanitize the air, which is easy and economical to obtain and totally reliable in operation.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a hood filter, for example for kitchens, comprises a purification device provided with a first air suction unit that comprises centrifugal ventilator means able to take in a stream of air from the surrounding environment along a determinate path and housed in at least one suction chamber, and also provided with a second processing unit to ionize and filter the air taken in by the centrifugal ventilator means.

According to one feature of the present invention, the second unit is disposed exclusively downstream of the first unit along said path, in order to purify the air taken in, and comprises air ionization means disposed in at least one ionization chamber provided above the suction chamber, and filter means disposed downstream of the ionization means along the path of the stream of the air taken in.

According to one feature of the present invention, the purification device comprises conveying means between the first unit and the second unit that are configured to receive the air taken in and diverted centrifugally by the centrifugal ventilator means along an obligatory path between the first unit and the second unit toward the inside of the ionization chamber in the second unit above the suction chamber. In this way it is possible to determine a slower stream of the air taken in, so as to define a desired time of residence in the second unit of the air taken in that is sufficiently prolonged. For example, this configuration of the conveying means can be defined as an elbow-shape.

The disposition of the processing unit that purifies the air downstream of the first suction unit, together with the extended time that the air remains in the second unit, so that the ionization means carry out an effective and complete purification action, allows to considerably improve the quality of the air in the environment, drastically abating impurities and odors compared to the state of the art. In this way, the present invention can also process large quantities of air, obtaining a high quality of the air exiting, without needing, as in the state of the art, to integrate the process with auxiliary electrostatic devices that electrically charge the odoriferous molecules and then abate them electrostatically, or germicidal lamps. Indeed, the present invention sanitizes and purifies the air directly with ionization, which creates positive and negative ions that react with the odoriferous molecules, causing the chemical scission thereof, without needing an electric field to capture said molecules.

In a variant form of embodiment, the first unit includes a first container that has the at least one suction chamber in which the centrifugal ventilator means are housed and the second unit comprises a second container that includes the at least one ionization chamber in which the ionization means are housed. The second container comprises the filter means, disposed beyond the ionization chamber. The first container and the second container are in fluidic communication by means of at least one transit aperture of the air taken in.

In some variants, the centrifugal ventilator means include a single motor that drives a centrifugal fan, housed in a single suction chamber that communicates with a single ionization chamber. In other variants, the centrifugal ventilator means include at least a pair of motors that drive corresponding centrifugal fans and housed in respective at least two separate suction chambers that communicate with at least two corresponding independent ionization chambers.

According to some forms of embodiment, the conveying means are formed by at least one transit segment of the air taken in provided in the terminal part of the at least one suction chamber of the first container, downstream of the centrifugal ventilator means. The at least one transit segment directly connects to the associated transit aperture to then lead into the at least one ionization chamber, defining a configuration of substantial inversion of the stream of air taken in. The inversion configuration is suitable to cause a slow-down of the stream of air taken in, so as to obtain the desired time of residence in the ionization chamber of the air taken in. For example, the configuration can be defined as an elbow shape.

According to some variants, the at least one transit segment develops in the at least one suction chamber, transversely to the axis of rotation of the centrifugal ventilator means, receiving tangentially the air taken in by them and diverted centrifugally, to direct it, in their turn substantially diverting it toward the ionization chamber above, for example by about 180°, toward the inside of the ionization chamber in the second unit.

According to some forms of embodiment, the filter means downstream of the ionization means are filters that comprise active carbons and/or zeolite. The solution that provides both active carbons and zeolite is a variant of the present invention.

In a variant form of embodiment, the filter means downstream of the ionization means include a metal frame that contains a pack container for the filtering material, which can be extracted like a drawer from the metal frame, which includes a first layer of active carbons, in use facing toward the ionization means, and a second layer of zeolite, in the opposite position.

Advantageously, the adsorbent materials used, active carbon and zeolite, have adsorbent capacities that combine for an optimum result and also help to reduce ambient humidity.

Advantageously, the filter means downstream of the ionization means stop the ionized particles, which act as cleaning agents on the active carbon and/or the zeolite present therein, guaranteeing a longer duration of the filter over time, interacting with the odorous molecules that the adsorbent materials retain.

Advantageously, the structure of the filter means downstream of the ionization means can be completely metal, so that it can be positioned in an oven for a certain period so as to regenerate the materials contained therein, and to further extend its average working life.

According to one form of embodiment, the purification device comprises a safety switch associated to the ionization means, which cooperates with the filter means and is configured to interrupt the electric supply to the ionization means as a function of the presence of the filter means. This guarantees the necessary safety of the purification device.

According to other variant forms of embodiment, the purification device comprises sensor means operatively associated to the ionization means and disposed in a housing separated from the ionization means, able to instantaneously detect the quality of the air taken in by the centrifugal ventilator means, so as to supply an indication of the quality of the air before it is processed by the ionization means. One or more by-pass air intakes are provided to pick up a determinate quantity of air transiting from the first unit to the second unit before the air is treated by the ionization means, and to direct it to the sensor means.

In variant forms of embodiment, the purification device has slots to take in the external air, so as to pick up and direct a desired quantity of air into the housing directly from the outside toward the sensor means. The sensor means are configured to be active even when at least the first unit is not active, so as to be able to intervene if the quality of the air is not satisfactory.

According to some forms of embodiment, the purification device comprises display means to display toward the outside information directly correlated to the quality of the air as detected by the sensor means.

The present invention also concerns a device to purify the air as expressed above for an apparatus to filter the air, such as a hood filter.

The present invention also concerns a method to purify air by means of a hood filter, or equivalent apparatus for filtering air, comprising a step of taking in the air by centrifugal ventilator means able to take in a stream of air from the surrounding environment along a determinate path, and housed in at least a suction chamber, and a treatment step of ionizing and filtering the air taken in by the centrifugal ventilator means. The treatment step is carried out exclusively downstream of the suction step along said path, in order to purify the air taken in, and provides to receive the air taken in and centrifugally diverted by the centrifugal ventilator means, to divert the air received, substantially inverting the flow thereof along an obligatory path toward an ionization chamber provided above the suction chamber, to carry out an ionization of the air, and a subsequent filtering downstream of the ionization along the path of the stream of air taken in.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view from below of an air purification device according to the present invention associated with a filtering apparatus;
- fig. 2 is a perspective view from above of an air purification device according to the present invention associated with a filtering apparatus;

- fig. 3 is a view of fig. 2 in separate parts;
- fig. 4 is a plan view from below of an air purification device according to the present invention;
- fig. 5 is a lateral view of fig. 4;
- fig. 6 is a plan view from above of fig. 4;
- fig. 7 is a perspective view from above of fig. 4;
- fig. 8 is a perspective view from below of fig. 4;
- fig. 9 is a section from IX to IX of fig. 6;
- fig. 10 is a section from X to X of fig. 6;
- fig. 11 is a view of fig. 7 in separate parts;
- fig. 12 is a view of part of fig. 11;
- fig. 13 is a perspective view from above of a variant air purification device according to the present invention;
- fig. 14 is a perspective view from below of fig. 13;
- fig. 15 is a plan view from above of fig. 13;
- fig. 16 is a section from XVI to XVI of fig. 15;
- fig. 17 is a section from XVII to XVII of fig. 15;
- fig. 18 is a view of fig. 13 in separate parts;
- fig. 19 is a view of part of fig. 18;
- fig. 20 is a diagram of the geometric average of the odor concentration detected in the experimental tests carried out for the present invention, for every pair of samples analyzed, in correspondence with each test.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

With reference to the attached drawings, an air purification device 10 according to the present invention is used in association with a hood 12 of the filtering type.

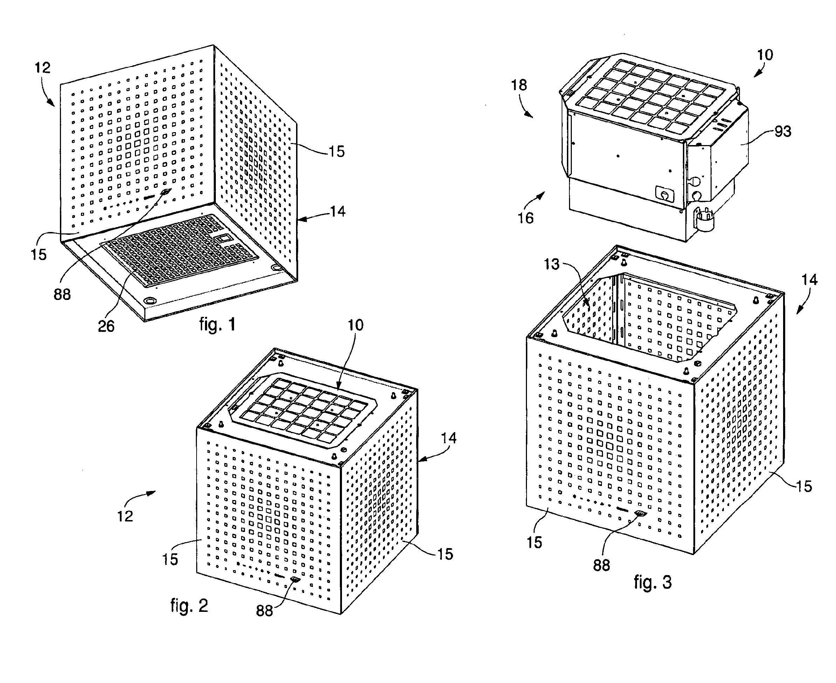

The hood 12 is provided with an external frame 14, with a box-like shape, which substantially functions as an external shell that delimits an internal housing space 13 (fig. 3) in which the device 10 is contained and laterally surrounded.

The frame 14 of the hood 12 can generally be made of glass, although the use of metal, such as stainless steel, other metals, metal alloys or other materials, such as plastic materials, is not excluded.

In this case, the frame 14 of the hood 12 is shaped by way of example as a parallelepiped defined by four lateral walls 15, in the case shown here made of screen printed glass, and open on the bottom and top (figs. 1, 2 and 3). There is nothing to exclude the frame 14 having another shape, for example a polygonal base, cylindrical, or with an elliptical or oval base.

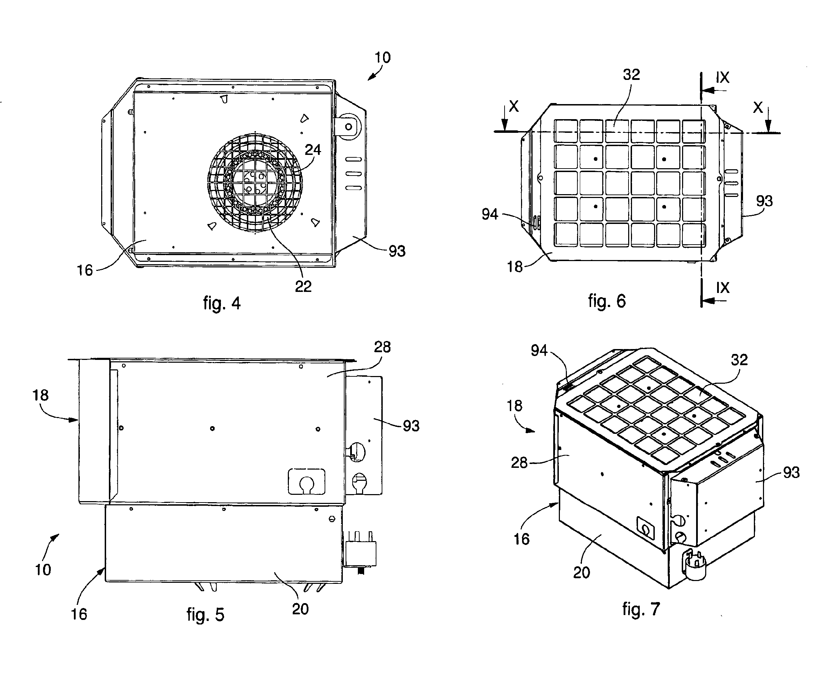

The device 10 comprises a first air suction unit 16 which comprises centrifugal ventilator means 22 able to take in a stream of air from the surrounding environment along a determinate path F, and to divert it in a centrifugal direction (figs. 4, 5 and 6).

The device 10 also comprises a second processing unit 18, to ionize and filter the air taken in by the centrifugal ventilator means 22, disposed exclusively downstream of the first unit 16 along the path F, in order to purify the air taken in.

In the form of embodiment in figs. 1-12, the centrifugal ventilator means 22 comprise a centrifugal fan 59, only partly visible in the drawings, connected to a motor 58.

The first unit 16 also comprises first filter means 26, disposed upstream of the centrifugal ventilator means 22 along the path F of the stream of air taken in, in this case mounted on the frame 14 of the hood 12 (fig. 1).

In the case shown here by way of example, the first unit 16 includes a first box-like container 20 which has a suction chamber 39 in which the centrifugal ventilator means 22 are housed.

The first container 20 has a first suction aperture 24 (fig. 4), for entry into the suction chamber 39, through which the air is taken in by the action of the centrifugal ventilator means 22, and is then directed toward the second unit 18.

The first aperture 24 is put in cooperation with the first filter means 26, which are removably mounted to cover the first aperture 24 to intercept the stream of air that is taken in through the same.

In some forms of embodiment, the first filter means 26 are formed by anti-grease metal filters, labyrinth, condensation or acrylic type, organized in the form of filtering panels of the type removably attached to the frame 14 of the hood 12 by rapid attachment means, which allow to remove the first filter means 26 so as to clean or replace them.

The second unit 18 comprises air ionization means 30 and second filter means 32, disposed downstream of the ionization means 30 along the path F of the stream of air taken in, through which the purified air is expelled.

In some forms of embodiment, the ionization means 30 are able to ionize the air taken in by the centrifugal ventilator means 22, to abate the pollution caused by particulates, and also to abate the odors due, particularly but not only, to the cooking of foods.

The device 10 also includes conveyor means 33 between the first unit 16 and the second unit 18, to convey the air taken in toward the ionization means 30.

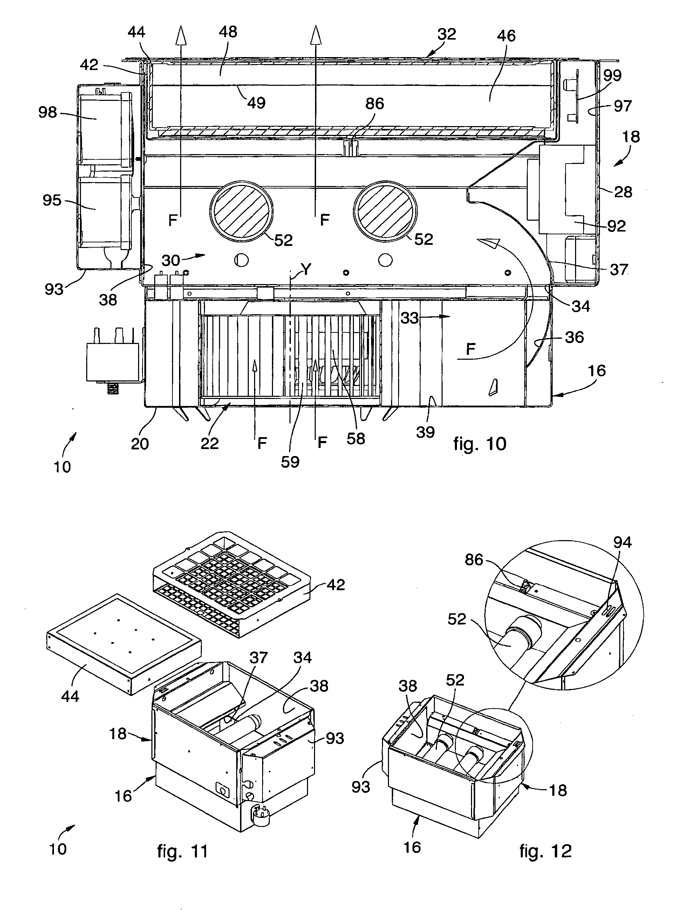

The conveyor means 33 are configured to receive the air taken in and diverted centrifugally by the centrifugal ventilator means 22, and to divert it in their turn by substantially inverting its flow along an obligatory path between the first unit 16 and the second unit 18 toward the ionization means 30 and to determine a slower stream of the air taken in, so as to define a desired time of residence in the second unit 18 of the air taken in that is sufficiently prolonged, and to obtain an optimum ionization effect. For example, the conveyor means 33 can be configured as elbow shaped, meaning a configuration that causes a diversion of the stream that determines overall an inversion of about 180°. In particular, in the solution shown in figs. 1-12, the conveyor means 33 are configured to determine a diversion of substantially 180° of the path of the air taken in by the centrifugal ventilator means 22, as can easily be seen in fig. 10.

In the case shown here, the second unit 18 comprises a second container 28 of the box-like type, in which the ionization means 30 and the second filter means 32 are housed.

In this case, the second container 28 is mounted above the first container 20, in particular installed directly resting on an upper wall of the first container 20. The first container 20 and the second container 28 are in fluidic communication by means of at least one transit aperture 34 of the air taken in.

In particular, the second container 28 internally comprises an ionization chamber 38 (fig. 10) in which the ionization means 30 are installed, while the second filter means 32 are disposed beyond the ionization chamber 38, in this case above it. In some forms of embodiment, the ionization chamber 38 is disposed above the suction chamber 39. The transit aperture 34 connects the ionization chamber 38 fluidically with the first container 20.

According to one form of embodiment of the present invention, the conveyor means 33 are formed by a transit segment 36 of the air taken in, provided in the first container 20 downstream of the centrifugal ventilator means 22, and which substantially represents the terminal part of the suction chamber 39.

The transit segment 36, in the solution in figs. 1-12, develops in the suction chamber 39, transversely to the axis of rotation Y of the centrifugal ventilator means 22, tangentially receiving the air taken in by them and diverted centrifugally, so as to direct it, diverting it in its turn substantially by about 180°, toward the inside of the ionization chamber 38 in the second unit 18.

In particular, the transit segment 36 directly connects to the transit aperture 34 to then lead into the ionization chamber 38, defining a configuration that diverts and substantially inverts the stream of air, for example elbow-shaped, suitable to cause a slow-down of the stream of air taken in, so as to obtain the desired time of residence of the air taken in inside the ionization chamber 38 (fig. 10).

Advantageously, the configuration that diverts and substantially inverts the stream of air, for example elbow-shaped, is defined by the transit segment 36 and a curved wall 37 associated with the transit aperture 34, which diverts the stream F and directs it toward the ionization means 30 (figs. 10 and 11).

The extended time of residence in the ionization chamber 38 determines an increase in the ionization effect on the air, and therefore an increase in the quality of the air purified by the device 10.

Furthermore, since the ionization means 30 are disposed upstream of the second filter means 32, the latter receive an air that is already partly treated and hence they can perform their filtering action with even greater effectiveness and extended duration.

The ionization means 30, in some forms of embodiment, comprise a plurality of ionizing elements, in this case electric capacitors 52. The number of capacitors 52 to be installed depends, in particular, on the sizes of the hood 12 and its capacity. Preferably, a control unit is provided to control the capacitors 52, which electronically adjusts the intensity of the ionization as a function of the ventilation required by the hood 12, or the speed of the centrifugal ventilator means 22.

Each capacitor 52 is provided with two cylindrical plates separated by a dielectric element, between which an alternate current is applied in order to charge them with an alternately positive and negative sign, so as to generate ionized molecules by means of a vibration of the air molecules.

In this way, the capacitors 52 ionize the stream of air, allowing to purify/sanitize not only the air but also the internal surfaces hit by the stream of air.

In more detail, the electric field generated by the capacitors 52 determines the vibration of the molecules of nitrogen and oxygen present in the air, increasing the energy in the collisions between the molecules. From the impacts between the molecules that derive from this vibration, around the capacitor 52, molecular ions are obtained of many different types, substantially without any ozone forming, which are responsible for the oxidoreduction effects on all the harmful molecules that the polluted air contains.

Consequently, the ionized stream of air sanitizes the internal surfaces of the hood 12, interacting with the microorganisms. Moreover, the ionized molecules are also aggregated to the particles responsible for the smells, determining their dis-aggregation and hence their elimination. Advantageously, the capacitors 52 are able to generate a number of ions that increases as the stream of air taken in by the centrifugal ventilator means 22 increases. ,

Furthermore, in some forms of embodiment, the second filter means 32 are advantageously filters that comprise adsorbent materials, including active carbons. One preferred form of embodiment provides that the second filter means 32 include, as adsorbent materials, both active carbons and zeolite.

The presence of zeolite is advantageous because it is an extremely porous and hygroscopic material, capturing a large quantity of humidity present in the air taken in.

Advantageously, the second filter means 32 include a metal frame 42 that contains a pack container 44 in which the active carbons and the zeolite are included, suitably distributed with respect to each other.

In a variant form of embodiment, the pack container 44 includes a first layer 46 of active carbons, in use facing toward the ionization means 30 so as to receive therefrom the ionized air directly, and a second layer 48 of zeolite, in the opposite position, which filters the air already treated by the active carbons. The first layer 46 and the second layer 48 can for example be separated by a metal mesh 49 with through holes, which also acts as a support.

The pack container 44 can easily be extracted like a drawer from the metal frame 42, so it can easily be removed for the heat regeneration treatments needed.

Given the nature of the second filter means 32, the heat regeneration treatments, which act on an electrostatic level on the active carbons and, on the zeolite, on a vaporization level of the humidity retained, can easily be carried out even in the home, for example by placing the pack container 44 for a determinate period of time in an oven at a desired temperature, for example about 200°C.

As a result of the reciprocal disposition of the ionization means 30 and the second filter means 32, the latter receive an ionized stream of air, with ionic and electric properties that are suitable to determine a partial or complete regeneration of the active carbons.

In some forms of embodiment, the device 10 also comprises a safety switch 86 associated with the ionization means 30, which is configured to interrupt the electric feed of the ionization means 30 if the second filter means 32 are removed, to prevent operators or the user from inadvertently reaching the zone of the ionization means 30 when they are still fed at high and potentially dangerous current.

In some forms of embodiment, the ionization means 30 are associated with a feeder 92 (fig. 10), electrically connected to the capacitors 52, in particular to the internal and external plates of each electric capacitor. For example, the function of the feeder 92 is to raise the value of the current supplied to the capacitors 52, and is electrically connected to an electronic control card 95 that controls the value of current generated. In the event of breakdowns or need for maintenance, each electric capacitor 52 can easily be separated from the feeder 92.

The capacitors 52 are preferably fed by the feeder 92 for example with a wave of current that can be the sinusoidal type with an effective value of frequency and current such as to trigger the effective production of ions therein, but not necessarily with constant parameters, so as to allow a modulation of their action.

The safety switch 86 is provided upstream of the feeder 92, and is mounted in series with the feeder 92 with the function of opening the feed circuit to the capacitors 52, interrupting the electric feed thereto in the event of necessity, when the second filter means 32 are removed. The latter in normal use close the electric circuit associated with the safety switch 86.

In some forms of embodiment, the centrifugal ventilator means 22 are associated with a feeder 98 (fig. 10), which manages the functioning thereof by means of an electronic card equipped with a power variator that can be activated by the user, in order to vary the speed of the centrifugal fans 59 and hence the quantity of air taken in.

In some forms of embodiment, a technical compartment 93 is associated, in this case externally, with the second container 28, to contain the control card 95 and the feeder 98.

In some forms of embodiment, the device 10 comprises sensor means 99 operatively associated to the ionization means 30, in this case installed on the second unit 18, in particular disposed in a housing 97 (fig. 10) separated from the ionization chamber 38. The sensor means 99 are able to instantaneously detect the quality of the air taken in by the centrifugal ventilator means 22, before the air is treated by the ionization means 30, so as to supply a coordinated electric signal that is used by the ionization means 30 to suitably calibrate the production of ions, so as to be able to regulate the production thereof in order to control their emission into the environment.

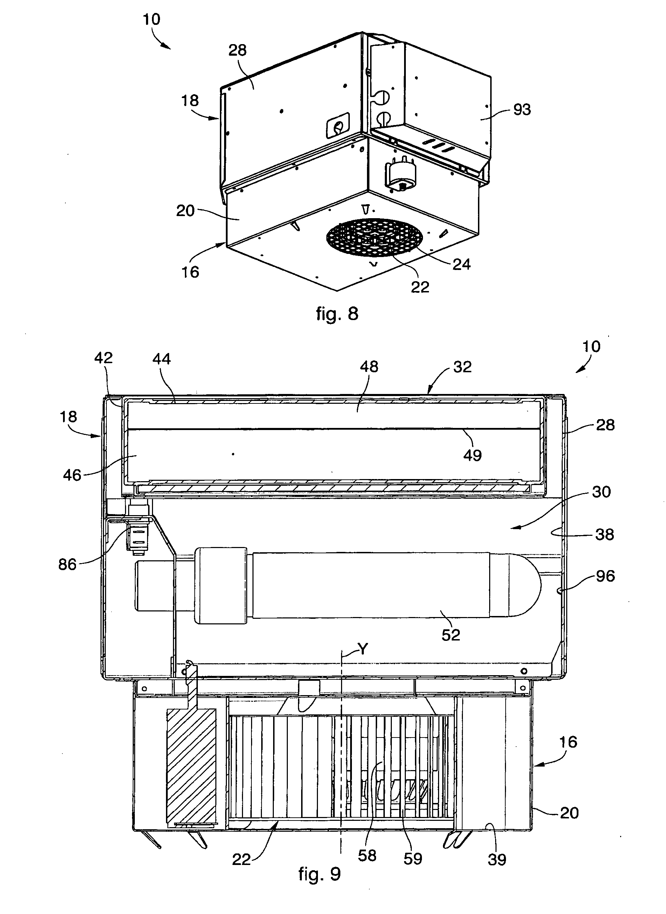

For this purpose one or more by-pass air intakes 96 are provided (fig. 9), which are configured as one or more holes through which the air passes to the housing 97 of the sensor means 99. The by-pass 96 is provided in the second unit 18, in particular in the second container immediately downstream of the transit aperture 34 and upstream of the ionization means 30.

The sensor means 99 supply, to the same control unit that activates the capacitors 52, an electric signal correlated to the quality of the air taken in to be treated, so as to influence the functioning of the ionization means 30. The signal is processed by the control unit so as to consequently control the activity of the capacitors 52, optimizing the functioning thereof. In some forms of embodiment, the functioning of the ionization means 30 is controlled by a feedback type, based on a set-point value, pre-set in the control unit, which is compared with the value detected dynamically by the sensor means 99 for the entering air to be treated and, based on this comparison, the activity of the capacitors 52 is consequently modulated. The set-point value defines an optimum degree of cleanliness of the environment so that the adjustment always tends to maintain a production of ions and ozone such as to have optimum cleanliness of the air and a healthy environment for the discharge of the hood 12.

According to an advantageous form of embodiment, the device 10 is also configured to analyze the air of the surrounding environment even if the first suction unit 16 and hence the associated hood 12 are not active. In fact, the device 10 is suitable to pick up continuously from the external environment a determinate quantity of air that is directed toward the sensor means 99. The sensor means 99 are active continuously, since they are advantageously always fed electrically, that is, they are under power, even when the first unit 16 is not active. If the sensor means 99 detect an unsatisfactory air quality, within determinate pre-set values, the first suction unit 16 and the second processing unit 18 are activated so that the air in the surrounding environment is purified. In this case, the device 10 includes slots, eyelets or analogous apertures, to take in the external air 94 (fig. 12), for example made at the top on the second unit 18 in correspondence with the housing 97, that pick up and directly direct a desired quantity of air from outside toward the sensor means 99.

Advantageously, the device 10 is associated with display means 88, for example of the luminous and/or chromatic type, such as colored LEDs or suchlike, which are disposed on the hood 12, in particular on a wall 15, for example a front wall, of the frame 14 and are able to display information toward the outside, for example by means of a luminous and/or chromatic variation, directly correlated to the quality of air as detected by the sensor means 99. To this purpose, once the device 10 is mounted in the frame 14, the display means 88 receive a correlated electric signal from the sensor means 99 and, based on this signal and according to a program pre-loaded in a control card, display the state of the quality of the air in the surrounding environment, for example in the form of a variable luminous or chromatic signal. In order to receive the signals required, the display means 88 can be electrically connected by cable, directly or indirectly, with the sensor means 99. The display means 88 can be associated with an aperture of the frame 14, made on one of the walls 15, for example a front wall, which aperture is shaped as desired (figs. 1, 2 and 3), possibly combined with a transparent element, neutral or colored, so that during normal use in the hood 12, the user or operator can receive directly and intuitively the information on the state of the quality of the air of the surrounding environment. For example, it may be convenient and intuitive to associate an emission of a yellow color, or other color depending on needs, to an unsatisfactory air quality, which therefore requires the intervention of the device 10, and an emission of a green color to a satisfactory air quality.

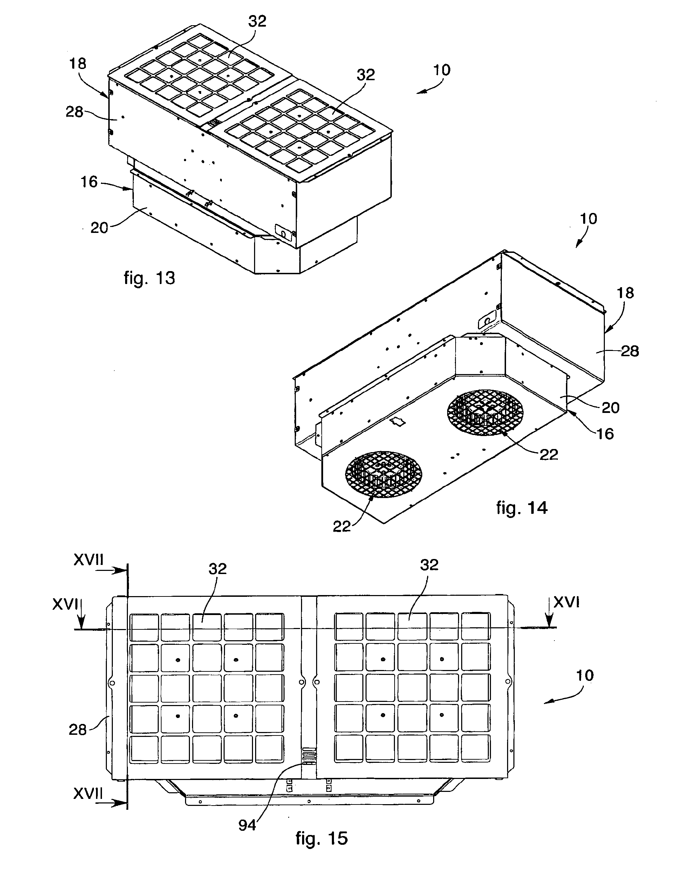

Figs. 13-18 show a variant form of embodiment of the present invention in which the centrifugal ventilator means 22 comprise two motors 58 and corresponding two centrifugal fans 59. The motors 58 are disposed in pairs in the first unit 16 in corresponding two suction chambers 39, separated from each other by a dividing wall 40. In this variant too, conveyor means 33 are provided, configured to determine a slow-down of the stream of air taken in, so as to define a desired sufficiently prolonged time of residence of the air taken into the second unit 18, and to obtain an optimum ionization effect.

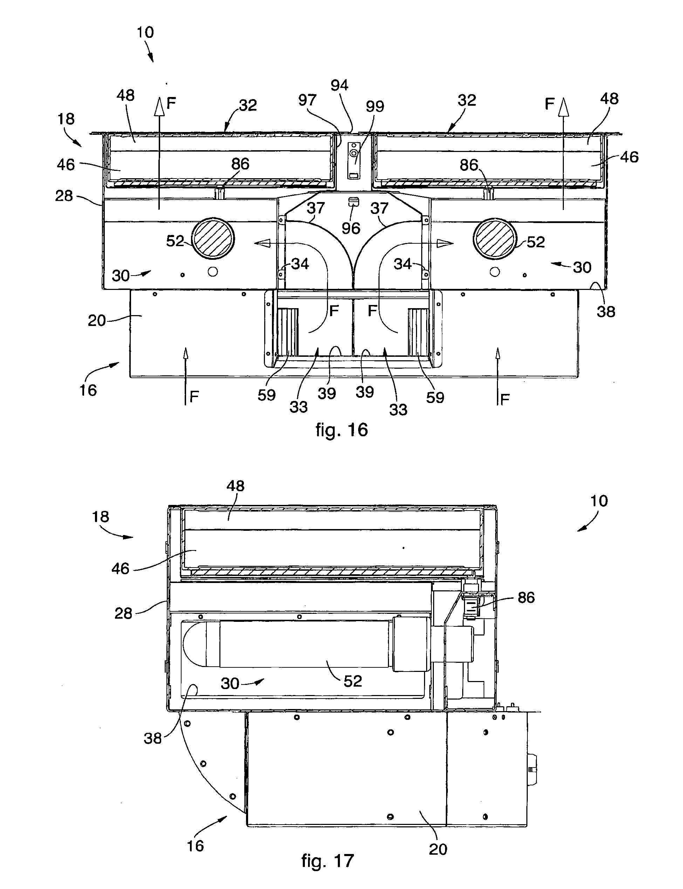

In this variant solution too, the conveyor means 33 receive the air tangentially from the centrifugal ventilator means 22, to direct it, diverting it substantially by about 180°, toward the inside of the corresponding ionization chambers 38 in the second unit 18, as can easily be seen in fig. 16.

In particular, each of the suction chambers 39 is associated with a corresponding transit segment 36, defined for example by a curved wall 37, which connects with an inversion, for example elbow-shaped, with an associated transit aperture 34. The two transit apertures 34 lead into two distinct ionization chambers 38, each provided with its own ionization means 30, in this case a single capacitor 52 for each ionization chamber 38 (fig. 16).

This form of embodiment is used when bigger quantities of suction are required, since the pair of centrifugal ventilator means 22 is characterized by a greater suction capacity, in particular the overall power added together of the two motors 58 is greater than the single motor 58 shown in figs. 1-12.

In this form of embodiment, two second filter means 32 as described are provided, each associated downstream of the corresponding ionization means 30, in the second unit 18.

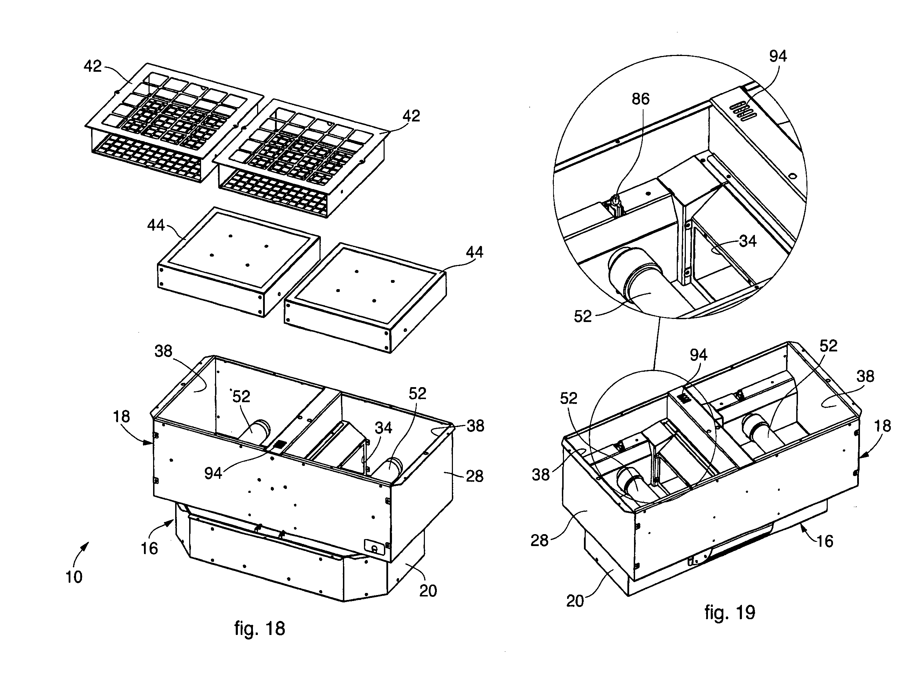

Furthermore, in this variant solution, sensor means 99 can also be provided in the same way, the general functioning of which is as described above. They are disposed in a housing 97 which in this case is made between the two ionization chambers 38 and receives a quantity of air from one or more by-passes 96 (fig. 16) associated with the transit segments 36, before the air is treated by the ionization means 30. Furthermore, in the form of embodiment shown in figs. 13-19 as well, it is possible to provide the control function of the air quality, with the first unit 16 and the hood 12 not active, thanks to the external air-intake slots 94 made in the case shown here at the top on the second unit 18, in correspondence with the housing 97 (fig. 19).

### EXPERIMENTAL DATA

Applicant has carried out an olfactometric analysis with the purpose of evaluating and demonstrating the improvement in the functioning efficiency of the hood according to the present invention provided with the purification device in question, in terms of abating the odor concentration.

The odor concentration was measured according to the dynamic olfactometric method (UNI EN 13725:2004 standard "Determination of odor concentration by means of dynamic olfactometry").

Dynamic olfactometry is the only method accepted internationally for measuring odor concentration (European Commission - Integrated Pollution Prevention and Control, Reference Document on the General Principles of Monitoring - July 2003). The Dynamic Olfactometry Laboratory allows to analyze and study the odors present in samples of air taken in the most varied ambient conditions. A group of selected people (examiners) determines the detection threshold of the odor contained in the effluent sampled. The number of dilutions at which the odor becomes perceptible is expressed as an index of the odor concentration in: Odorimetric Units per Cubic Meter (ouE/m³).

Table 1 shows the description of the tests and the samples taken.

| Table 1: description of the tests made and the samples taken | |
|---|---|
| Test | Description |
| A | Hood switched on. |
| | Cooking boiled meats: 60 minutes cooking 2 Kg of meat with stock cube, in two separate pans with 1 Kg of meat in each. |
| | Switch off the boiled meat. Take sample in room center with hood switched on. |
| | 40 more minutes with hood functioning with a lid on the pan of boiled meat and pan closed in a cupboard. Take sample in room center. |
| B | Hood switched off. |
| | Cooking boiled meats: 60 minutes cooking 2 Kg of meat with stock cube, in two separate pans with 1 Kg of meat in each. |
| | Switch off the boiled meat. Take sample in room center with hood switched off. |
| | Hood switched on for 40 minutes with lid on pan of boiled meats and pan closed in a cupboard. Take sample in room center. |
| C | Hood switched on. |
| | Cooking fried food: frying 1 Kg of mixed fish in 2 liters of oil (about 15 minutes) and subsequent frying in the same oil of 1 Kg of French fries (about 15 minutes). |
| | Switch off fried food. Take sample in room center with hood switched on. |
| | 40 more minutes with hood functioning with a lid on the pan of fried food and pan closed in a cupboard. Take sample in room center. |
| D | Hood switched on. |
| | Cooking fried food: frying 1 Kg of mixed fish in 2 liters of oil (about 15 minutes) and subsequent frying in the same oil of 1 Kg of French fries (about 15 minutes). |
| | Switch off fried food. Take sample in room center with hood switched off. |
| | 40 more minutes with hood functioning with a lid on the pan of fried food and pan closed in a cupboard. Take sample in room center. |
| E | Hood switched on. |
| | Cooking boiled food: 60 minutes cooking 2 Kg of cabbage, in two separate pans with 1 Kg of cabbage in each. |
| | Switch off boiled food. Take sample in room center with hood switched on. |
| | 40 more minutes with hood functioning with a lid on the pan of boiled food and pan closed in a cupboard. Take sample in room center. |

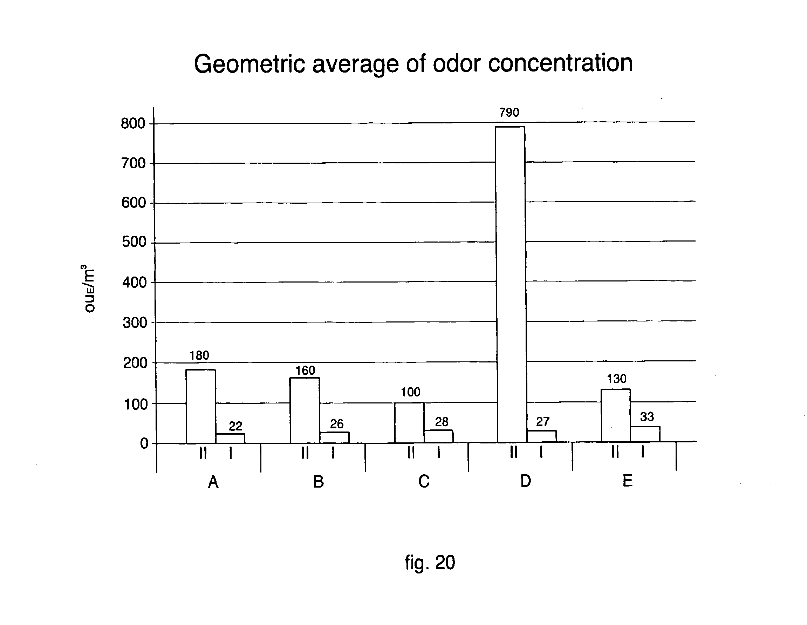

In correspondence with each operation two samples were taken, in order to increase the significance of the data obtained. The result is expressed as a geometric average of the two values, and is shown in fig. 20.

In fig. 20 columns I indicate the values (ouE/m³) of the averages of the reference samples ("white"), while columns II indicate the values (ouE/m³) of the averages of the values corresponding to the end-of-test samples.

If we observe fig. 20 it is clear that the reference samples ("white") for test D, made with French fries and mixed fried fish, with the hood switched off, are those that show the greatest odor concentration, equal to 790 ouE/m³.

Furthermore, for tests A, B, C and E, the reference samples ("white") document between 100 ouE/m³ and 180 ouE/m³, values that are considerably less than the "whites" of test D.

The values relating to the end-of-test samples, therefore with the hood functioning, show values of between 22 ouE/m³ and 33 ouE/m³. This odor concentration can be considered "background" ambient air, as defined by the Guidelines "IPPC H4 Draft - Odors", October 2002, United Kingdom, which defines an odor concentration comprised between 5 and 40 ouE/m³ for "background air".

Table 2 shows the values of odor concentration and the odor abatement efficiency for each test carried out.

| Table 2: odor abatement efficiency for every test done | | | |
|---|---|---|---|
| Type of emission | Test | Geometric average C_{od} (ou_{E}/m³) | Efficiency (%) |
| Reference white | A | 180 | 88 |
| Sample taken after treatment | | 22 | |
| Reference white | B | 160 | 84 |
| Sample taken after treatment | | 26 | |
| Reference white | C | 100 | 72 |
| Sample taken after treatment | | 28 | |
| Reference white | D | 790 | 97 |
| Sample taken after treatment | | 27 | |
| Reference white | E | 130 | 75 |
| Sample taken after treatment | | 33 | |

As shown by the results of the tests carried out, the functioning of the hood according to the present invention is optimal and an improvement in all the working contexts tested in the course of the tests, with an efficiency varying from 72% in test C to 97% in test D.

Furthermore, it can be seen how, after the action of the hood, the odor concentration in the place where the food is cooked can be compared with the values of "ambient air" as shown in the Guidelines IPPC - H4 Draft.

## Claims

1. Hood filter comprising an air purification device, provided with a first suction unit (16) to take in the air that comprises centrifugal ventilator means (22) able to take in a stream of air from the surrounding environment along a determinate path (F) and housed in at least a suction chamber (39), and with a second processing unit (18) to ionize and filter the air taken in by said centrifugal ventilator means (22), **characterized in that** the second unit (18) is disposed exclusively downstream of the first unit (16) along said path (F), in order to purify the air taken in, and comprises air ionization means (30) disposed in at least an ionization chamber (38) provided above the suction chamber (39) and filter means (32), disposed downstream of the ionization means (30) along said path (F) of the stream of the air taken in **and in that** it comprises conveying means (33) between the first unit (16) and the second unit (18) that are configured to receive the air taken in and centrifugally diverted by the centrifugal ventilator means (22) and to divert the air received, substantially inverting the stream along an obligatory path between said first unit (16) and said second unit (18), toward the inside of the ionization chamber (38) in the second unit (18) above the suction chamber (39).

2. Hood filter as in claim 1, **characterized in that** the first unit (16) includes a first container (20) that has at least a suction chamber (39) in which the centrifugal ventilator means (22) are housed and the second unit (18) comprises a second container (28) of the box type that includes said at least one ionization chamber (38) in which the ionization means (30) are housed, said second container (28) comprising the filter means (32), disposed beyond the ionization chamber (38), the first container (20) and the second container (28) being in fluidic communication by means of at least a transit aperture (34) of the air taken in.

3. Hood filter as in claim 1 or 2, **characterized in that** the centrifugal ventilator means (22) include a single motor (58) that drives a centrifugal fan (59), housed in a single suction chamber (39) that communicates with a single ionization chamber (38), or at least two motors (58) that drive corresponding centrifugal fans (59) and housed in respective at least two separate suction chambers (39) that communicate with at least two corresponding independent ionization chambers (38).

4. Hood filter as in claim 2 or 2 and 3, **characterized in that** said conveying means (33) are formed by at least one transit segment (36) of the air taken in provided in the terminal part of the suction chamber (39) of the first container (20), downstream of the centrifugal ventilator means (22), said at least one transit segment (36) directly connecting to the associated transit aperture (34) to then lead into the ionization chamber (38), defining a configuration of substantial inversion of the stream of air taken in.

5. Hood filter as in claim 4, **characterized in that** said at least one transit segment (36) develops in the suction chamber (39), transversely to the axis of rotation (Y) of the ventilator means (22), receiving tangentially the air taken in by them, to direct it, substantially diverting it toward the ionization chamber (38) above.

6. Hood filter as in any claim hereinbefore, **characterized in that** said filter means (32) are filters that comprise active carbons and/or zeolite.

7. Hood filter as in claim 6, **characterized in that** said filter means (32) include a metal frame (42) that contains a pack container (44) for the filtering material, which can be extracted like a drawer from the metal frame (42), said pack including a first layer (46) of active carbons, in use facing toward the ionization means (30), and a second layer (48) of zeolite, in the opposite position.

8. Hood filter as in any claim hereinbefore, **characterized in that** it comprises a safety switch (86) associated to the ionization means (30), which cooperates with the filter means (32) and is configured to interrupt the electric feed to the ionization means (30) as a function of the presence of the filter means (32).

9. Hood filter as in any claim hereinbefore, **characterized in that** it comprises sensor means (99) operatively associated to the ionization means (30) and disposed in a housing (97) separated from the ionization means (30), able to instantaneously detect the quality of the air taken in by the centrifugal ventilator means (22), one or more by-pass air intakes (96) being provided to pick up a determinate quantity of air transiting from the first unit (16) to the second unit (18) before said air is treated by the ionization means (30), and to direct it to the sensor means (99).

10. Hood filter as in claim 9, **characterized in that** it has slots to take in the external air (94) to pick up and direct a desired quantity of air into the housing (97) directly from the outside toward the sensor means (99), said sensor means (99) being configured to be active even when at least the first unit (16) is not active.

11. Hood filter as in claim 9 or 10, **characterized in that** it comprises display means (88) to display toward the outside information directly correlated to the quality of the air as detected by the sensor means (99).

12. Hood filter as in any claim hereinbefore, **characterized in that** the first unit (16) also comprises first filter means (26) disposed upstream of the centrifugal ventilator means (22) along the path (F) of the stream of air taken in.

13. Method to purify air by means of a hood filter (12) as in any claim hereinbefore, comprising a step of taking in the air by means of centrifugal ventilator means (22) able to take in a stream of air from the surrounding environment along a determinate path (F) and housed in at least a suction chamber (39), and a treatment step of ionizing and filtering the air taken in by said centrifugal ventilator means (22), **characterized in that** the treatment step is carried out exclusively downstream of the suction step along said path (F), in order to purify the air taken in, and provides to receive the air taken in and diverted centrifugally by the centrifugal ventilator means (22), to divert the air received, substantially inverting the flow along an obligatory path toward an ionization chamber (38) provided above the suction chamber (39), to carry out an ionization of the air in the ionization chamber (38) and a subsequent filtration, downstream of the ionization along said path (F) of the stream of air taken in.

## Patentansprüche

1. Dunstabzugsfilter, aufweisend ein Luftreinigungsgerät, welches mit einer ersten Saugeinheit (16) vorgesehen ist, um Luft aufzunehmen, welche Radialventilator-Mittel (22) aufweist, die in der Lage sind einen Luftstrom von der Umgebung entlang eines festgelegten Weges (F) aufzunehmen, und in zumindest einer Saugkammer (39) untergebracht ist, und mit einer zweiten Verarbeitungseinheit (18) vorgesehen ist, um die Luft, aufgenommen durch die Radialventilator-Mittel (22), zu ionisieren und zu filtern, **dadurch gekennzeichnet, dass** die zweite Einheit (18) ausschließlich stromabwärts der ersten Einheit (16) entlang des Weges (F) angeordnet ist, um die aufgenommene Luft zu reinigen, und Luftionisierungs-Mittel aufweist (30) aufweist, die in zumindest einer Ionisierungskammer (38) angeordnet sind, die über der Saugkammer (39) und Filtermittel (32) **angeordnet**, stromabwärts der Ionisierungsmittel (30) entlang des Weges (F) des aufgenommenen Luftstroms vorgesehen ist, **und dadurch, dass** es Transportmittel (33) zwischen der ersten Einheit (16) und der zweiten Einheit (18) aufweist, die konfiguriert sind, die aufgenommene und zentrifugal durch die Radialventilator-Mittel (22) verteilte Luft zu erhalten, und die erhaltene Luft, im Wesentlichen den Strom entlang eines zwingenden Weges zwischen der ersten Einheit (16) und der zweiten Einheit (18) umkehrend, in Richtung des Inneren der Ionisierungskammer (38) in der zweiten Einheit (18) über der Saugkammer (39) zu verteilen.

2. Dunstabzugsfilter gemäß Anspruch 1, **dadurch gekennzeichnet, dass** die erste Einheit (16) einen ersten Behälter (20) umfasst, der zumindest eine Saugkammer (39) hat, in welcher die Radialventilator-Mittel (22) untergebracht sind, und die zweite Einheit (18) einen zweiten Behälter (28) in Kastenform aufweist, der die zumindest eine Ionisierungskammer (38). in welcher die Ionisierungsmittel (30) untergebracht sind, wobei der zweite Behälter (28) aufweisend die FilterMittel (32), angeordnet hinter der Ionisierungskammer (38), wobei der erste Behälter (20) und der zweite Behälter (28) in Fluid-Verbindung durch zumindest eine Durchgangs-Öffnung (34) **der aufgenommenen Luft** sind, umfasst.

3. Dunstabzugsfilter gemäß Anspruch 1 oder 2, **dadurch gekennzeichnet, dass** die Radialventilator-Mittel (22) einen einzelnen Motor (58) umfassen, der einen Radialventilator (59) antreibt, der in einer einzelnen Saugkammer (39) untergebracht ist, die mit einer einzelnen Ionisierungskammer (38) in Verbindung steht, oder mindestens zwei Motoren (58), welche die entsprechenden Radialventilatoren (59) antreiben und in jeweils mindestens zwei getrennten Saugkammern (3) untergebracht sind, die mit mindestens zwei entsprechenden unabhängigen Ionisierungskammern (38) in Verbindung stehen.

4. Dunstabzugsfilter gemäß Anspruch 2 oder 2 und 3, **dadurch gekennzeichnet, dass** die Transport-Mittel (33) mit durch zumindest ein Übergangssegment (36) **der** aufgenommenen Luft ausgestaltet sind, die in dem End-Teil der Saugkammer (39) des ersten Behälters (20) vorgesehen sind, stromabwärts der Radialventilator-Mittel (22), wobei mindestens ein Übergangssegment (36) direkt mit der angegliederten Übergangsöffnung (34) verbunden ist, um dann in die Ionisierungskammer (38) zu führen, definierend eine Konfiguration von wesentlicher Umkehr des aufgenommenen Luftstroms.

5. Dunstabzugsfilter gemäß Anspruch 4, **dadurch gekennzeichnet, dass** das mindestens ein Übergangssegment (36) sich in die Saugkammer (39) **erstreckt, quer** zu der Rotationsachse (Y) der Ventilator-Mittel (22), tangential erhaltend der durch sie aufgenommene Luft, um sie im Wesentlichen in Richtung der obigen Ionisierungskammer (38) verteilend zu führen.

6. Dunstabzugsfilter gemäß einem der vorstehenden Ansprüche, **dadurch gekennzeichnet, dass** die Filtermittel (32) Filter sind, die Aktivkohle und/oder Zeolith aufweisen.

7. Dunstabzugsfilter gemäß Anspruch 6, **dadurch gekennzeichnet, dass** die Filtermittel einen Metallrahmen (42) umfassen, der einen PACK-Behälter (44) für das Filtermaterial beinhaltet, welches wie ein Schubfach von dem Metallrahmen (42) entnehmbar ist, wobei der PACK-Behälter eine erste Schicht (46) von Aktivkohle, in Gebrauch auf die Ionisierungsmittel (30) gerichtet, und eine zweite Schicht, in der gegenüberliegenden Position, aufweist.

8. Dunstabzugsfilter gemäß einem der vorstehenden Ansprüche, **dadurch gekennzeichnet, dass** er einen Sicherheitsschalter (86) umfasst, der mit den Ionisierungsmitteln (30) verbunden ist, welcher mit den Filtermitteln (32) zusammenwirkt, und konfiguriert ist, die Stromzufuhr zu den Ionisierungsmitteln (30) als eine Funktion der Anwesenheit von Filtermitteln (32) zu unterbrechen.

9. Dunstabzugsfilter gemäß einem der vorstehenden Ansprüche, **dadurch gekennzeichnet, dass** er Sensormittel aufweist, die operativ mit den Ionisierungsmitteln (30) verbunden sind und in einem Gehäuse (97), getrennt von den Ionisierungsmitteln (30), angeordnet sind, in der Lage sind sofort die Qualität der durch die Linearventilator-Mittel (22) aufgenommene Luft zu ermitteln, eine oder mehr bypass - Lufteinlässe (96) **vorgesehen sind**, um eine bestimmte Menge von Luft aufzunehmen, die **die Strecke** von der ersten Einheit (16) zu der zweiten Einheit (18) durchquert, bevor die Luft durch die Ionisierungsmittel (30) behandelt wird und **sie** zu den Sensormitteln (99) zu führen.

10. Dunstabzugsfilter gemäß Anspruch 9, **dadurch gekennzeichnet, dass** er Schlitze hat, um die Außenluft (94) aufzunehmen, um eine gewünschte Menge an Luft in das Gehäuse (97) direkt von außen in Richtung der Sensormittel (99) aufzunehmen und zu führen, wobei die Sensormittel (99) konfiguriert sind, aktiv zu sein, auch wenn die mindestens erste Einheit (16) nicht aktiv ist.

11. Dunstabzugsfilter gemäß Anspruch 9 oder 10, **dadurch gekennzeichnet, dass** er Anzeigemittel (88) aufweist, um auf die Außenseite gerichtet Informationen, direkt korreliert zu der Luftqualität, wie durch die Sensormittel (99) ermittelt, anzuzeigen.

12. Dunstabzugsfilter gemäß einem der vorstehenden Ansprüche, **dadurch gekennzeichnet, dass** die erste Einheit (16) auch erste Filtermittel (26) aufweist, die stromaufwärts der Radialventilator-Mittel (22) entlang des Weges (F) des aufgenommenen Luftstroms angeordnet sind.

13. Verfahren zum Reinigen von Luft durch einen Dunstabzugsfilter (12) wie in einem der vorstehenden Ansprüche, aufweisend einen Schritt von Aufnehmen der Luft durch Radialventilator-Mittel (22), die in der Lage sind einen Luftstrom von der Umgebung entlang eines bestimmten Wegs (F) aufzunehmen und in zumindest einer Saugkammer (39) untergebracht sind, und einen Behandlungsschritt von Ionisierung und Filterung der Luft, aufgenommen durch die Radialventilator-Mittel (22), **dadurch gekennzeichnet, dass** der Behandlungsschritt ausschließlich nachgeschaltet des Saugschritts entlang des Weges (F) durchgeführt wird, um die aufgenommene Luft zu reinigen, und vorsieht die Luft, aufgenommen und zentrifugal verteilt durch die Radialventilator-Mittel (22), zu erhalten, um die erhaltene Luft, im Wesentlichen umdrehend den Strom entlang eines obligatorischen Weges in Richtung einer Ionisierungskammer (38), vorgesehen über der Saugkammer (39), zu verteilen, um eine Ionisierung der Luft in der Ionisierungskammer (38) und eine nachfolgende Filtration, stromabwärts der Ionisierung entlang des Weges (F) des aufgenommenen Luftstroms, durchzuführen.

## Revendications

1. Filtre de hotte comprenant un dispositif de purification d'air, pourvu d'une première unité d'aspiration (16) pour aspirer l'air qui comprend des moyens de ventilation centrifuges (22) aptes à aspirer un courant d'air depuis l'environnement avoisinant le long d'un chemin déterminé (F) et logés dans au moins une chambre d'aspiration (39), et d'une seconde unité de traitement (18) pour ioniser et filtrer l'air aspiré par lesdits moyens de ventilation centrifuges (22), **caractérisé en ce que** la seconde unité (18) est disposée exclusivement en aval de la première unité (16) le long dudit chemin (F), afin de purifier l'air aspiré, et comprend des moyens d'ionisation d'air (30) disposés dans au moins une chambre d'ionisation (38) prévue au-dessus de la chambre d'aspiration (39) et des moyens de filtration (32), disposés en aval des moyens d'ionisation (30) le long dudit chemin (F) du courant d'air aspiré et **en ce qu'**il comprend des moyens de transport (33) entre la première unité (16) et la seconde unité (18) qui sont configurés pour recevoir l'air aspiré et déviés de manière centrifuge par les moyens de ventilation centrifuges (22) et pour dévier l'air reçu, essentiellement en inversant le courant le long d'un chemin obligatoire entre ladite première unité (16) et ladite seconde unité (18), vers l'intérieur de la chambre d'ionisation (38) dans la seconde unité (18) au-dessus de la chambre d'aspiration (39).

2. Filtre de hotte selon la revendication 1, **caractérisé en ce que** la première unité (16) inclut un premier conteneur (20) qui comporte au moins une chambre d'aspiration (39) dans laquelle les moyens de ventilation centrifuges (22) sont logés et la seconde unité (18) comprend un second conteneur (28) du type boîte qui inclut ladite ou lesdites chambre(s) d'ionisation (38) dans laquelle les moyens d'ionisation (30) sont logés, ledit second conteneur (28) comprenant des moyens de filtration (32), disposés au-delà de la chambre d'ionisation (38), le premier conteneur (20) et le second conteneur (28) étant en communication fluidique au moyen d'au moins une ouverture de transit (34) de l'air aspiré.

3. Filtre de hotte selon la revendication 1 ou 2, **caractérisé en ce que** les moyens de ventilation centrifuges (22) incluent un unique moteur (58) qui entraîne une hélice centrifuge (59), logé dans une unique chambre d'aspiration (39) qui communique avec une unique chambre d'ionisation (38), ou au moins deux moteurs (58) qui entraînent des hélices centrifuges correspondantes (59) et qui sont logés dans au moins deux chambres d'aspiration respectives séparées (39) qui communiquent avec au moins deux chambres d'ionisation indépendantes (38) correspondantes.

4. Filtre de hotte selon la revendication 2 ou 2 et 3, **caractérisé en ce que** lesdits moyens de transport (33) sont formés par au moins un segment de transit (36) de l'air aspiré prévu dans la partie terminale de la chambre d'aspiration (39) du premier conteneur (20), en aval des moyens de ventilation centrifuges (22), ledit ou lesdits segment(s) de transit (36) étant directement relié(s) à l'ouverture de transit associée (34) pour ensuite conduire dans la chambre d'ionisation (38), formant une configuration d'inversion essentielle du courant d'air aspiré.

5. Filtre de hotte selon la revendication 4, **caractérisé en ce que** ledit segment de transit (36) s'étend dans la chambre d'aspiration (39), perpendiculairement à l'axe de rotation (Y) des moyens de ventilation (22), en recevant tangentiellement l'air aspiré par ceux-ci, pour le diriger, en le déviant essentiellement vers la chambre d'ionisation (38) au-dessus.

6. Filtre de hotte selon l'une quelconque des revendications précédentes, **caractérisé en ce que** lesdits moyens de filtration (32) sont des filtres qui comprennent des charbons actifs et/ou une zéolithe.

7. Filtre de hotte selon la revendication 6, **caractérisé en ce que** lesdits moyens de filtration (32) incluent un cadre métallique (42) qui contient un conteneur de paquet (44) pour le matériau de filtration qui peut être extrait comme un tiroir du cadre métallique (42), ce paquet incluant une première couche (46) de charbons actifs, tournée lors de l'utilisation vers les moyens d'ionisation (30) et une seconde couche (48) de zéolithe, dans la position opposée.

8. Filtre de hotte selon l'une quelconque des revendications précédentes, **caractérisé en ce qu'**il comprend un interrupteur de sécurité (86) associé aux moyens d'ionisation (30), qui coopère avec les moyens de filtration (32) et est configuré pour interrompre l'alimentation électrique des moyens d'ionisation (30) en fonction de la présence des moyens de filtration (32).

9. Filtre de hotte selon l'une quelconque des revendications précédentes, **caractérisé en ce qu'**il comprend des moyens de détection (99) fonctionnellement associés aux moyens d'ionisation (30) et disposés dans un logement (97) séparé des moyens d'ionisation (30), aptes à déterminer instantanément la qualité de l'air aspiré par les moyens de ventilation centrifuges (22), une ou plusieurs conduites de dérivation d'entrée d'air (96) étant prévues pour prélever une quantité déterminée d'air transitant de la première unité (16) à la seconde unité (18), avant que cet air ne soit traité par les moyens d'ionisation (30), et pour la diriger vers les moyens de détection (99).

10. Filtre de hotte selon la revendication 9, **caractérisé en ce qu'**il comporte des fentes pour aspirer de l'air externe (94) à prélever et diriger une quantité souhaitée d'air dans le logement (97) directement à partir de l'extérieur vers les moyens de détection (99), lesdits moyens de détection (99) étant configurés pour être actifs même lorsqu'au moins la première unité (16) n'est pas active.

11. Filtre de hotte selon la revendication 9 ou 10, **caractérisé en ce qu'**il comprend des moyens d'affichage (88) pour afficher vers l'extérieur des informations directement liées à la qualité de l'air tel que déterminée par les moyens de détection (99).

12. Filtre de hotte selon l'une quelconque des revendications précédentes, **caractérisé en ce que** la première unité (16) comprend également des premiers moyens de filtration (26) disposé en amont des moyens de ventilation centrifuges (22) le long du chemin (F) du courant d'air aspiré.

13. Procédé de purification d'air à l'aide d'un filtre de hotte (12) selon l'une quelconque des revendications précédentes, comprenant une étape d'aspiration d'air au moyen de moyens de ventilation centrifuges (22) aptes à aspirer un courant d'air depuis l'environnement avoisinant le long d'un chemin déterminé (F) et logés dans au moins une chambre d'aspiration (39), et une étape de traitement par ionisation et filtration de l'air aspiré par lesdits moyens de ventilation centrifuges (22), **caractérisé en ce que** l'étape de traitement est mise en oeuvre exclusivement en aval de l'étape d'aspiration le long dudit chemin (F), afin de purifier l'air aspiré, et prévoit de recevoir l'air aspiré et dévié de manière centrifuge par les moyens de ventilation centrifuges (22), de dévier l'air reçu, essentiellement en inversant le flux le long d'un chemin obligatoire vers une chambre d'ionisation (38) prévue au-dessus de la chambre d'aspiration (39), d'effectuer une ionisation de l'air dans la chambre d'ionisation (38) et une filtration subséquente, en aval de l'ionisation le long dudit chemin (F) du courant d'air aspiré.
